(19) Europäisches Patentamt / European Patent Office / Office européen des brevets

(11) EP 2 143 770 A1

(12) EUROPEAN PATENT APPLICATION
published in accordance with Art. 153(4) EPC

(43) Date of publication:
13.01.2010 Bulletin 2010/02

(51) Int Cl.:
C09D 127/12 (2006.01)
B32B 27/34 (2006.01)
C09D 127/18 (2006.01)
C09D 179/08 (2006.01)
B32B 27/30 (2006.01)
C09D 7/12 (2006.01)
C09D 133/00 (2006.01)
C09D 5/04 (2006.01)

(21) Application number: 08752219.9

(22) Date of filing: 28.04.2008

(86) International application number:
PCT/JP2008/058209

(87) International publication number:
WO 2008/136467 (13.11.2008 Gazette 2008/46)

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: 27.04.2007 JP 2007118014
05.06.2007 JP 2007148729

(71) Applicant: I.S.T. Corporation
Otsu-shi
Shiga 520-2153 (JP)

(72) Inventors:
• SANDAIJI, Takanobu
Otsu-shi
Shiga 520-2153 (JP)
• KATAYAMA, Nobuyuki
Otsu-shi
Shiga 5202141 (JP)

(74) Representative: TBK-Patent
Bavariaring 4-6
80336 München (DE)

(54) COATING MATERIAL, LAYERED PRODUCT, AND PROCESS FOR PRODUCING CYLINDRICAL LAYERED PRODUCT

(57) The object of the present invention is to provide a coating material for coating from which a fixing belt that meets demand characteristics such as heat resistance to fixing temperatures and releasability toward toner can be manufactured at low cost, and to provide the coating material for coating that does not produce "sag", "slack", or uneven thickness in a fluororesin coating film. The coating material for coating according to the present invention comprises fluororesin particles, a liquid dispersion of volatile resin particles, a thixotropy-imparting agent and an organic solvent. The liquid dispersion of volatile resin particles contains volatile resin particles and a nonvolatile portion. Furthermore, the volatile resin particles are resin particles that undergo volatilization or thermal decomposition at a temperature lower than the thermal decomposition temperature of fluororesin. Moreover, the nonvolatile portion is contained at ≥5 parts by weight based on 100 parts by weight of fluororesin particles.

Fig. 1

## Description

[TECHNICAL FIELD]

The present invention relates to a coating material for coating of which the main component is a fluororesin, to a laminated body that has a covering film that is obtained by baking the coating material for coating, and to a method for manufacturing a cylindrical laminated body utilizing a coating material for coating. More specifically, it relates to a coating material for coating that can be molded into a laminated body efficiently, to a laminated body having a fluororesin covering film with superior characteristics such as heat resistance and non-stickiness, and to a method for manufacturing a cylindrical laminated body wherein the cylindrical laminated body can be manufactured efficiently. Furthermore specifically, it relates to a fluororesin-containing coating material for coating that can be molded into a fluororesin covering film with superior releasability and durability and that is suitable for use in the manufacture of the fixing belt of an electrophotographic image forming device such as a copier or printer, and to a cylindrical laminated body for use as a fixing belt that has a fluororesin covering film.

[BACKGROUND ART]

In electrophotographic image forming devices such as copiers or laser printers, for the final stage of printing or copying, the toner image on the sheet-type transfer material such as paper is heat-melted to fix it onto the transfer material. Thus, in such an electrophotographic image forming device, normally a polyimide resin cylindrical body or a metal cylindrical body is used as a fixing belt (for example, see Patent Documents 1, 2 and 3).

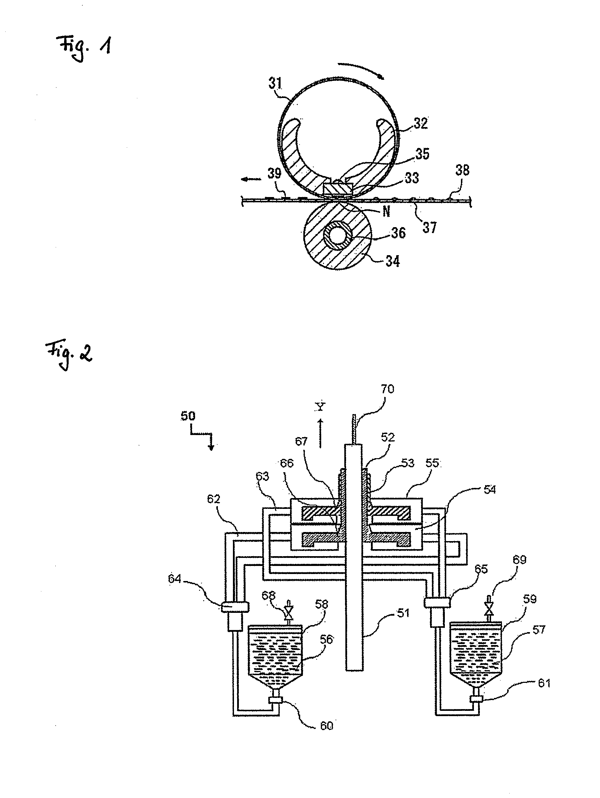

In the fixing device of such a belt fixing system, as shown in Figure 1, belt guide 32 and ceramic heater 33 are positioned on the inside of fixing belt 31, and pressurizing roller 34 is in contact under pressure with ceramic heater 33. Furthermore, for pressurizing roller 34, metal core 36 is coated with rubber, is connected to a drive source, and is rotationally driven by the drive source. Thus, in such a fixing device, while transfer paper 37 whereon the toner image is formed is being sequentially fed in between ceramic heater 33 and pressurizing roller 34, toner 38 is heat-melted and fixed onto the transfer paper, and final fixed image 39 is obtained. Furthermore, the temperature of the ceramic heater is controlled on the basis of the measured value from thermistor 35. In this way, in the fixing device of the belt fixing system, heat is applied substantially directly to the toner from the ceramic heater through the extremely thin film of the fixing belt. For this reason, the fixing device of the belt fixing system is characterized by the heat application component achieving the predetermined fixing temperature instantaneously without any waiting time from the application of power until the fixable state is achieved, and also with little power consumption.

Thus, in the fixing belt, heat resistance with respect to the fixing temperature (normally 180 °C to 220 °C) and releasability with respect to the toner are required. For this reason, generally, the outer surface of the fixing belt is coated with a heat-resistant, releasing-type coating such as a fluororesin (for example, see Patent Documents 4 and 5). In addition, the fixing belt is required to have durability to withstand speeds of 30-40 sheets/minute for approximately 100,000 copies. For this reason, the fixing belt is required to have characteristics such as firm adhesiveness between the base layer and the releasing layer, and abrasion resistance for the releasing layer.

Such fixing belts are generally obtained by being molded as a cylindrical body from a polyimide precursor solution obtained by the reaction of a tetracarboxylic acid dianhydride and a diamine in a polar polymerization solvent and then dried, then the cylindrical body is coated with a primer and dried, then the cylindrical body is further coated with a fluororesin dispersion over the primer and then dried, and finally the polyimide precursor is baked to undergo imidization together with fluororesin at high temperature, or another method is used such as application of a metallic material to the cylindrical body, and after this cylindrical body is coated with a primer and dried, it is coated with a fluororesin over this primer, then dried and baked. As a method for the manufacture of the cylindrical body from a polyimide precursor solution, for example, a method is recommended in which after molding the polyimide precursor solution to a certain thickness on the outer surface or inner surface of a metal mold, the imidization is completed by heating or chemically and the polyimide cylindrical body is obtained by separating it from the metal mold (for example, see Patent Document 6).

[Patent Document 1]
Japanese Published Unexamined Patent Application No. H03-25471 (1991)
[Patent Document 2]
Japanese Published Unexamined Patent Application No. H08-220907 (1996)
[Patent Document 3]
Japanese Published Unexamined Patent Application No. 2004-174555
[Patent Document 4]
Japanese Published Unexamined Patent Application No. 2005-59588
[Patent Document 5]
WO 2002/046302
[Patent Document 6]
Japanese Published Unexamined Patent Application No. H07-178741

[INVENTION DISCLOSURE]

[PROBLEM TO BE SOLVED BY THE INVENTION]

Nevertheless, in the abovementioned conventional technique for manufacturing a laminated body as stated above, since a large number of steps are necessary, it is extremely difficult to manufacture a fixing belt that meets the above-stated requirements at low cost. Moreover, the fluororesin dispersion generally has an extremely low viscosity, and when a thick coating is applied the coat drips and loosens, and the coating is of uneven thickness along the longitudinal direction.

An object of the present invention is to provide a coating material for coating from which a fixing belt that meets demand characteristics such as heat resistance to fixing temperatures and releasability toward toner can be manufactured at low cost, and to provide the coating material for coating that does not produce "sag", "slack", or uneven thickness in a fluororesin coating film. In addition, another object of the present invention is to provide a cylindrical laminated body for use as a fixing belt with superior releasability and durability using this coating material for coating.

[MEANS TO SOLVE THE PROBLEM]

A coating material for coating according to the present invention comprises fluororesin particles, a liquid dispersion of volatile resin particles, a thixotropy-imparting agent and an organic solvent. The fluororesin particles preferably have an average particle diameter that is ≥0.1 μm and ≤15 μm. A liquid dispersion of volatile resin particles contains resin particles (referred to below as "volatile resin particles") that undergo volatilization or thermal decomposition at a temperature lower than the thermal decomposition temperature of fluororesin. Moreover, in this liquid dispersion of volatile resin particles, the nonvolatile portion contained is ≥5 parts by weight based on 100 parts by weight of fluororesin particles. Furthermore, the upper limiting value for the nonvolatile portion is that for the weight before a value that will increase the thixotropy up to where use as a coating material used for coating is substantially impossible.

Furthermore, it is preferable in the present invention for the thixotropy-imparting agent to be water-swellable or water-soluble acrylic resin particles (trade name: Junlon (registered trademark), Banstar or the like), and water-swellable or water-soluble cross-linked acrylic resin particles (trade name: Junlon (registered trademark), or the like) are more preferable. Furthermore, it is preferable for this thixotropy-imparting agent to impart thixotropy in a coating material for coating in an alkaline environment.

Moreover, the fluororesin in the present invention preferably contains ≥75 wt% of a tetrafluoroethylene / perfluoro(alkyl vinyl ether) copolymer (abbreviated below as "PFA").

In addition, the volatile resin particles in the present invention are preferably acrylic resin particles with an average particle diameter of ≥0.01 μm and ≤15 μm, urethane resin particles with an average particle diameter of ≥0.01 μm and ≤15 μm, or a mixture thereof.

Additionally, the liquid dispersion of volatile resin particles in the present invention is preferably an aqueous dispersion.

Moreover, the organic solvent in the present invention is preferably dimethylacetamide, N-methyl-2-pyrrolidone or a mixture thereof.

In addition, the coating material for coating in the present invention preferably has a viscosity that is ≥200 poise and ≤5,000 poise.

Additionally, the coating material for coating in the present invention preferably has a thixotropy index that is greater than 1 and less than 5.

Moreover, it is preferable for the coating material for coating in the present invention furthermore to contain an antistatic agent. Furthermore, this antistatic agent is preferably filamentous nickel with an average particle diameter of ≥0.1 μm and ≤15 μm.

In addition, it is preferable for the coating material for coating in the present invention furthermore to contain an adhesive resin. Furthermore, this adhesive resin is preferably added as ≥1.0 parts by weight and ≤10 parts by weight based on 100 parts by weight for the fluororesin particles. Additionally, this adhesive resin is preferably a polyimide resin or a polyimide resin precursor.

Moreover, the laminated body according to the present invention comprises a substrate and a covering film. The covering film coats the substrate. In addition, this covering film is obtained by baking the coating material for coating.

Furthermore, the substrate in the present invention is preferably a heat-resistant resin or a metal. Additionally, this heat-resistant resin is preferably a polyimide resin. Moreover, this metal is preferably at least one selected from the group consisting of silver, aluminum, nickel, iron and stainless steel. In addition, when the substrate is metal, it is preferable for the adhesive resin to be contained in the coating material for coating.

Additionally, the laminated body according to the present invention comprises a polyimide resin layer, a covering film layer and a mixture layer. The covering film layer is molded from the abovementioned coating material for coating. The mixture layer is a mixture of a polyimide resin phase that is continuous with the polyimide resin layer and a covering film resin phase that is continuous with the covering film layer. Furthermore, such a mixture layer can be molded, for example, by coating in a superimposing manner of a coating material for coating and a polyimide precursor solution.

Moreover, the laminated body according to the present invention is preferably a cylindrically-shaped body that can be utilized as a fixing tube. In addition, it is preferable for a portion that has not been coated with a covering film of the coating material for coating to be present at one end or both ends in the longitudinal direction of this laminated body.

Additionally, the laminated body in the present invention preferably has a surface resistivity that is $\geq 10^6$ $\Omega$/sq. and $<10^{15}$ $\Omega$/sq.

Moreover, the manufacturing method for the cylindrical laminated body according to the present invention comprises a superimposing application step, a solvent removal step, an imidization step. In the superimposing application step, the abovementioned coating material for coating and a polyimide precursor solution are applied in a superimposing manner on a core body. In the solvent removal step, the solvent is removed from the coating material for coating and the polyimide precursor solution. In the imidization step, the polyimide precursor is imidized along with the formation of the coating material for coating into a covering film.

Furthermore, in the superimposing application step in the present invention, it is preferable for the coating material for coating to be applied in a length that is the same as the coating length for the polyimide precursor solution, or in a length that is shorter than the coating length for the polyimide precursor solution.

In addition, in the superimposing application step in the present invention, the coating material for coating and the polyimide precursor solution are applied in a superimposing manner to the core body while the coating material for coating and the polyimide precursor solution are being supplied to a covering film molding device that comprises a first cylindrical wall that possesses an aperture, and a second cylindrical wall that possesses an aperture and that is positioned on the top side of the first cylindrical wall so that the axis of the second cylindrical wall runs along the axis of the first cylindrical wall, a first delivery portion that delivers the polyimide precursor solution to the aperture of the first cylindrical wall, and a second delivery portion that delivers the coating material for coating to the aperture of the second cylindrical wall. Furthermore, either the covering film molding device is fixed and the core body can be moved in the upward or downward direction, or the core body is fixed and the covering film molding device can be moved in the upward or downward direction.

Additionally, for the superimposing application step in the present invention, initially, when the coating material for coating and the polyimide precursor solution are applied to the core in a superimposing manner, it is preferable for the delivery to the aperture of the second cylindrical wall by the second delivery portion to be delayed with respect to the delivery to the aperture of the first cylindrical wall by the first delivery portion.

Moreover, for the superimposing application step in the present invention, when the application process is interrupted, it is preferable for the interruption of the delivery to the aperture of the first cylindrical wall by the first delivery portion to be delayed with respect to the interruption of the delivery to the aperture of the second cylindrical wall by the second delivery portion.

[Effect of the Invention]

The coating material for coating according to the present invention comprises fluororesin particles, a liquid dispersion of volatile resin particles, a thixotropy-imparting agent and an organic solvent. For this reason, this coating material for coating will exhibit thixotropy such that the viscosity will increase. Consequently, if this coating material for coating is used, when a fluororesin coating film is molded onto the surface of a cylindrical body, it can be more difficult for "sag", "slack", or uneven thickness to be produced therein. In addition, when the substrate in the manufacture of the cylindrical laminated body is molded from a polyimide precursor solution, the polyimide precursor solution and the coating material for coating according to the present invention can be molded as liquids that are laminated at the same time onto a core body. In other words, it is possible to reduce the number of manufacturing steps for such a cylindrical laminated body. Consequently, it is possible to manufacture at low cost a fixing belt or the like wherein the heat resistance with respect to the fixing temperature and the releasability with respect to the toner are satisfactory. Thus, with a polyimide precursor solution and a coating material for coating in a laminated state, if the imidization of the polyimide precursor and the formation of a covering film from the coating material for coating are carried out, it is possible for the polyimide resin phase and the coating resin phase to form a mixed layer. For this reason, the polyimide substrate and the covering film of coating material for coating can be tightly integrated. Consequently, if the coating material for coating of the present invention is utilized, it is possible to obtain a cylindrical laminated body for use as a fixing belt with superior durability. Additionally, if a cylindrical laminated body is manufactured in this way, a primer treatment to strengthen the adhesion between the fluororesin layer and the polyimide resin layer (base layer) is unnecessary. For this reason, steps such as the surface modification step for the polyimide resin layer, the primer coating step, primer liquid drying step and the like can be completely eliminated. Consequently, the number of steps for the manufacture of a cylindrical laminated body can be substantially reduced together with a reduction in the raw material costs. Consequently, if the coating material for coating according to the present invention is used, it is possible to manufacture at low cost a fixing belt or the like wherein the heat resistance with respect to the fixing temperature and the releasibility with respect to the toner are satisfactory.

[Brief explanation of diagrams]

[Figure 1] This is a schematic cross-section of the fixing device of an electrophotographic image forming device.
[Figure 2] This is a schematic cross-section of a covering film molding device.

[Explanation of symbols]

31 Fixing belt
32 Belt guide
33 Ceramic heater
34 Pressurizing roller
35 Thermistor
36 Metal core
37 Copying paper
38 Toner
39 Fixed image
50 Covering film molding device
51 Core body
52 Layer molded from a polyimide precursor solution
53 Layer molded from a coating material for coating
54 First covering film molding die
55 Second covering film molding die
56 RC-5063 polyimide precursor solution with added conductive agent
57 Coating material for coating
58 First pressure tank
59 Second pressure tank
60 First solution valve
61 Second solution valve
62 First distribution tube
63 Second distribution tube
64 First distributor
65 Second distributor
66 First slit apertures
67 Second slit apertures
68 First pressure valve
69 Second pressure valve
70 Suspension cord
N Nip part
Y Direction for core body to be lifted

[BEST MODE FOR IMPLEMENTING THE INVENTION]

The embodiment of the present invention will be explained here.

Furthermore, the present invention relates to a coating material for coating that contains a fluororesin, to a laminated body obtained by using this coating material for coating, specifically a cylindrical laminated body that is most suitable for use as the fixing belt for an electrophotographic image forming device or the like. Furthermore, the coating material for coating according to the present invention is not limited in any way to being a coating material for use in manufacturing a fixing belt for an electrophotographic image forming device, and can be used in any component or product that requires releasability or non-stickiness.

The coating material for coating according to the present invention contains fluororesin particles, a liquid dispersion of volatile resin particles, a thixotropy-imparting agent and an organic solvent.

The fluororesin particles have an average particle diameter that is $\geq 0.1$ $\mu$m and $\leq 15$ $\mu$m. Furthermore, the fluororesin particles more preferably have an average particle diameter that is $\geq 0.2$ $\mu$m and $\leq 10$ $\mu$m. For fluororesin particles with an average particle diameter that is $<0.1$ $\mu$m, cracks are readily produced in the fluororesin covering film and it is difficult to mold the covering film, while conversely if the average particle diameter of the fluororesin particles exceeds 15 $\mu$m, the surface roughness of the fluororesin covering film will become too great. Moreover, from the perspective of the ease of molding the covering film, it is more preferable for the fluororesin particles to be of a bimodal type having two average particle diameters or of a multimodal type.

In addition, in the present embodiment, the main component of the fluororesin particles is tetrafluoroethylene perfluoro(alkyl vinyl ether) copolymer (abbreviated below as "PFA") particles. Specifically, it is preferable for $\geq 75$ wt% of the fluororesin particles to be PFA particles. Furthermore, it is more preferable for PFA particles to make up $\geq 85$ wt% of the fluororesin particles, and furthermore preferable that they make up $\geq 90$ wt% of the fluororesin particles. Furthermore, it is not preferable for the PFA content to be lower than 75 wt% because of a reduction in the non-stickiness, and in particular in the non-stickiness toward the toner in an electrophotographic image-forming device. Examples of secondary fluororesin particle components that can be named, without any particular limitation, include poly(tetrafluoroethylene) (PTFE) particles, tetrafluoroethylene hexafluoropropylene copolymer (FEP) particles, poly(vinylidene fluoride) (PVDF) particles and the like.

The liquid dispersion of volatile resin particles contains volatile resin particles. Thus, in this liquid dispersion of volatile resin particles, the nonvolatile portion contained is $\geq 5$ parts by weight based on 100 parts by weight of fluororesin particles. Furthermore, the upper limiting value for the added nonvolatile portion is that for the weight before a value that will increase the thixotropy up to where use as a coating material used for coating is substantially impossible.

Furthermore, in the present invention, volatile resin particles are resin particles that undergo volatilization or thermal decomposition at a temperature lower than the thermal decomposition temperature of fluororesin. Furthermore, for these volatile resin particles, when the coating material for coating according to the present invention is baked after application and drying, volatilization or decomposition takes place gradually while maintaining the binding (binder) effect toward the fluororesin particles, and cracks due to shrinkage are prevented in this operation. Additionally, until the baking of the fluororesin is complete, it is desirable for the volatile resin particles to be completely volatilized or decomposed and removed. If the volatile resin particles are not completely decomposed and volatilized, defects such as cracks, pinholes or the like are produced in the fluororesin covering film, and the fluororesin covering film becomes discolored.

Moreover, it is preferable for the average particle diameter of the volatile resin particles to be smaller than the average particle diameter of the fluororesin particles, specifically ≥0.01 μm and ≤15 μm is preferred. In addition, it is more preferable for the average particle diameter of the volatile resin particles to be ≥0.05 μm and ≤10 μm. If the average particle diameter of the volatile resin particles is less than 0.01 μm, the binding (binder) effect will be low and cracks will readily be produced in the fluororesin covering film, while conversely if the average particle diameter of the volatile resin particles exceeds 15 μm, the binding of the fluororesin particles will become difficult.

Examples of volatile resin particles that can be used in the present invention that can be named include, for example, acrylate resin particles, urethane particles and the like. Additionally, mixtures thereof can also be used. Furthermore, the liquid dispersion of these volatile resin particles can be an aqueous dispersion. Moreover, the "acrylate resin" and "urethane resin" in the present invention, are exemplified by "carboxyvinyl polymers" and "urethane bond-containing polymers", respectively.

Examples that can be named of acrylate resin particles that can be used in the present invention include, for example, the particles produced by emulsion or suspension polymerization from a (meth)acrylic monomer, and the like. Furthermore, "(meth)acrylic" means "acrylic" or "methacrylic". Examples of (meth)acrylic monomers that can be named include, for example, (meth)acrylic acid, methyl (meth)acrylate, ethyl (meth) acrylate, propyl (meth)acrylate, dimethylpropyl (meth) acrylate, butyl (meth)acrylate, pentyl (meth)acrylate, hydroxyethyl (meth)acrylate and the like. Furthermore, in the present invention, a (meth)acrylic monomer can be copolymerized each other, and it can be copolymerized with styrene, divinylbenzene, vinyl acetate and the like.

In addition, examples that can be named of urethane resin particles that can be used in the present invention include, for example, particles produced by emulsion or suspension polymerization from a diisocyanate and a polyol, or particles produced by a forced dispersion in water from urethane resin.

Diisocyanates are classified as aromatic, aliphatic and alicyclic, and examples that can be named for aromatic polyisocyanates include diphenylmethane diisocyanate (MDI), tolylene diisocyanate, 1,5-naphthalene diisocyanate, xylylene diisocyanate (XDI), tetramethylxylylene diisocyanate and the like. Examples for aliphatic polyisocyanates that can be named include hexamethylene diisocyanate, trimethylhexamethylene diisocyanate and the like. Examples for alicyclic polyisocyanates that can be named include isophorone diisocyanate, hydrogenated MDI, hydrogenated XDI, norbornane diisocyanate and the like. Furthermore, in the present invention, with the goal of cross-links and the like, triisocyanates can also be used.

Polyols are classified into polyether diols, polyester diols and polycarbonate diols, and examples of polyether diols that can be named include poly(ethylene glycol), poly(propylene glycol), poly(tetramethylene glycol), dimethicone copolyol and the like. Examples of polyester diols that can be named include condensation polymers of glycols and dibasic acids. Examples of diols that can be named include ethylene glycol, 1,4-butylene glycol, 1,6-hexane glycol, neopentyl glycol, 3-methyl-1,5-pentanediol, diethylene glycol and the like. Additionally, examples of dibasic acids that can be named include malonic acid, succinic acid, adipic acid, sebacic acid, decamethylenedicarboxylic acid, phthalic acid and the like. Examples of polycarbonate diols that can be named include those from the reaction of a glycol with a carbonate. Examples of carbonates that can be named include dimethyl carbonate, diethyl carbonate, diphenyl carbonate, ethylene carbonate, propylene carbonate and the like. Furthermore, in the present invention, as chain-extension agents and cross-linking agents, short-chain diols, triols, polyvalent alcohols or amine compounds can be used.

In the present invention, in the liquid dispersion of volatile resin particles, the nonvolatile portion is ≥5 parts by weight based on 100 parts by weight of fluororesin particles. Furthermore, the upper limiting value for the added nonvolatile portion is that for the weight before a value that will increase the thixotropy up to where use as a coating material used for coating is substantially impossible. Moreover, this nonvolatile portion is more preferably ≥7.5 parts by weight and ≤55 parts by weight. A nonvolatile portion of less than 5 parts by weight will result in a lower binding (binder) effect, and cracks will be produced readily in the fluororesin covering film. In addition, what is referred to here as the "nonvolatile portion" is the residue from the liquid dispersion of volatile resin particles after heating at 105 °C for 1 hour.

As the thixotropy-imparting agent, non-straight-chain, water-soluble cross-linked acrylic resin particles are preferred. Examples of the water-soluble cross-linked acrylic resin particles that can be named includes acrylate resin particles produced by polymer production methods for include, for example, emulsion or suspension polymerization of a (meth)acrylic monomer emulsion, and the like. Examples of (meth)acrylic monomers that can be named include, for example, (meth)acrylic acid, methyl (meth)acrylate, ethyl (meth)acrylate, propyl (meth)acrylate, dimethylpropyl (meth)acrylate, butyl (meth)acrylate, pentyl (meth)acrylate, hydroxyethyl (meth)acrylate and the like. Furthermore, a (meth)acrylic monomer can be copolymerized each other, and it can be copolymerized with styrene, divinylbenzene, vinyl acetate and the like. Additionally, either poly(meth)acrylates or their salts can be used. Examples of acrylate salts that can be named include ammonium salts, sodium salts and the like.

Moreover, it is preferable for the coating material for coating of the present invention to contain an adhesive resin. The adhesive resin not only contributes to the adhesiveness with the heat-resistant resin substrate or the metal substrate, but it will also prevent cracks in the fluororesin covering film obtained by baking the coating material for coating, and will increase the abrasion resistance of the fluororesin covering film. Examples that can be named of an adhesive resin that can be used in the present invention include a polyimide resin or a polyimide resin precursor. Furthermore, "polyimide resin" means "polymer that contains imide bonds". Examples that can be named of polyimide resin for use in the present invention, without being limiting in any particular way, include polyimide resin, polyamideimide resin, polyetherimide resin and the like.

Furthermore, this polyimide resin is preferably added as ≥1.0 parts by weight and ≤10 parts by weight based on 100 parts by weight for the fluororesin particles. The polyimide resin is more preferably added as ≥2.0 parts by weight and ≤8.0 parts by weight based on 100 parts by weight for the fluororesin particles. Unless at least 1.0 parts by weight of the polyimide resin is added, based on 100 parts by weight for the fluororesin particles, there is a tendency for the force of the adhesiveness to the heat-resistant resin or metal to become lower. Conversely, the addition of ≥10 parts by weight of polyimide resin, based on 100 parts by weight for the fluororesin particles, is not preferred because the non-stickiness of the fluororesin covering film will become lower.

In addition, in order to prevent cracks after air drying of the coating film, the coating material for coating according to the present invention preferably contains a water-soluble polymer. Examples of water-soluble polymers that can be named include poly(ethylene glycol), poly(propylene glycol), poly(tetramethylene glycol), dimethicone copolyol and the like. Furthermore, among such water-soluble polymers, poly(ethylene glycol) is preferred from the perspective of inexpensiveness. There is no particular limitation regarding the method for adding the water-soluble polymers. The water-soluble polymer can either be added to the final coating material for coating, or it can be added in a previous step.

Additionally, in order to adjust the viscosity or the like of the coating material for coating according to the present invention, it is permissible for any of the following commonly known solvents to be added. Examples of such commonly known solvents that can be named include alcohols such as methanol, ethanol, isopropanol, butanol, diacetone alcohol and the like; diols such as ethylene glycol, propylene glycol, butylene glycol, 2-butene-1,4-diol, pentamethylene glycol, 2-methyl-2,4-pentanediol, 2-ethyl-1,3-hexanediol, diethylene glycol, triethylene glycol, tetraethylene glycol and the like; triols such as glycerin, 2-ethyl-2-hydroxymethyl-1,3-propanediol, 1,2,6-hexanetriol and the like; glycol ethers such as ethylene glycol methyl ether, ethylene glycol butyl ether, ethylene glycol dimethyl ether, diethylene glycol methyl ether, diethylene glycol butyl ether, diethylene glycol dimethyl ether, triethylene glycol methyl ether, triethylene glycol dimethyl ether, poly(propylene glycol), poly(tetramethylene glycol), poly(oxyethylene)-poly(oxypropylene) glycol; dimethicone copolyol or poly(oxyethylene/oxypropylene) methylpolysiloxane copolymers, and in addition, cyclic ethers such as tetrahydrofuran, dioxane and the like; ketones such as acetone, methyl ethyl ketone, methyl isobutyl ketone, cyclohexanone and the like; aromatic hydrocarbons such as toluene, xylene and the like; esters such as ethyl acetate, butyl acetate, diethyl carbonate, γ-butyrolactone and the like; amides such as N,N-dimethylformamide, N,N-dimethylacetamide, N-methyl-2-pyrrolidone and the like, and the like. There is no particular limitation regarding the method for adding the commonly known solvents. The commonly known solvents can either be added to the final coating material for coating, or it can be added in a previous step.

Moreover, in the coating material for coating according to the present invention, when it is necessary to allow excess electric charge to escape from the surface of the laminated body obtained after molding, an antistatic agent can be added. Furthermore, examples of antistatic agents that can be named include carbon-type conductive agents such as carbon black, black lead, carbon nanotubes and the like; metals and metal oxides such as nickel, silver, titanium oxide, alumina and the like; and ionic conductive agents such as antimony pentoxide and the like. In addition, although there is no particular limitation to the method of addition for the antistatic agent, it can be selected from among various commonly known methods. For example, a conductive agent can be added to the final coating material for coating, or a conductive agent can be added during a manufacturing step. Additionally, an antistatic agent can be added by being dry blended with the fluororesin particles beforehand, or it can be embedded in the fluororesin particles beforehand. Such an example that can be named is MP-600 (Mitsui-DuPont Fluorochemicals) or the like. Furthermore, in the present invention, a preferred antistatic agent is filamentous nickel. If filamentous nickel is used as the antistatic agent, the mixing during the manufacture of the coating material for coating of the present invention is relatively easy, and it is possible to maintain satisfactory smoothness and non-stickiness of the fluororesin covering film molded from this coating material for coating. Furthermore, the filamentous nickel used in the present invention preferably has an average particle diameter of ≥0.1 μm and ≤15 μm. An average particle diameter for the filamentous nickel of <0.1 μm is not preferred because handling is difficult. At the same time, an average particle diameter for the filamentous nickel that exceeds 15 μm is not preferred because the surface roughness of the fluororesin covering film will increase.

Furthermore, the antistatic agent is preferably added as ≥1 part by weight and ≤50 parts by weight based on 100 parts by weight of the fluororesin particles, and it is more preferably added as $\geq 2$ parts by weight and $\leq 40$ parts by weight based on 100 parts by weight of the fluororesin particles. If the antistatic agent is added as <1 part by weight based on 100 parts by weight of the fluororesin particles, the surface resistance will be hardly reduced at all, and the addition will not be meaningful. Conversely, the addition of a quantity of antistatic agent greater than 50 parts by weight based on 100 parts by weight of the fluororesin particles is not preferred because the non-stickiness of the fluororesin covering film will become lower.

Moreover, there is no objection to the addition of the following commonly known additives to the coating material for coating according to the present invention within a range that is not harmful to the goal of the present invention. Examples of such commonly known additives that can be named include fillers, pigments, pigment dispersing agents, solid lubricants, anti-settling agents, leveling agents, surface modification agents, water absorption agents, gelation inhibiting agents, oxidation inhibiting agents, ultraviolet radiation absorbing agents, light stabilizing agents, plasticizers, color separation prevention agents, anti-skinning agents, surfactants, antifoaming agents, antibacterial agents, mildew-proofing agents, preservative agents, thickening agents, thermal conductivity imparting agents and the like. Furthermore, examples of thermal conductivity imparting agents that can be named include silicon carbide, boron nitride, aluminum nitride, alumina, zinc oxide, magnesium oxide, diamond, black lead, carbon fiber, carbon nanofiber, carbon nanotubes, copper, aluminum, silver, iron, nickel and the like. In addition, although there is no particular limitation to the method of addition for the commonly known additives, it can be selected from among various commonly known methods. For example, an additive can be added to the final coating material for coating, or an additive can be added during a manufacturing step. Additionally, an additive can be added by being dry blended with the fluororesin particles beforehand, or an additive can be embedded in the fluororesin particles beforehand. Such an example that can be named is MP-600 from Mitsui-Du-Pont Fluorochemicals, or the like.

The organic solvent acts as a dispersing agent for the fluororesin particles. Furthermore, when an adhesive resin is added to the coating material for coating, it also acts as a solvent for the adhesive resin (for example, polyimide resin or the like). Moreover, examples that can be named of solvents that can be used in the present invention include N,N-dimethylformamide, N,N-dimethylacetamide, N,N-diethylacetamide, N-methyl-2-pyrrolidone, 1,3-dimethyl-2-imidazolidinone, N-methylcaprolactam, hexamethylphosphoric triamide, 1,2-dimethoxyethane, diglyme, triglyme and the like. Furthermore, when a polyimide varnish or a polyimide precursor varnish is liquid molded simultaneously with the coating material for coating according to the present invention, N,N-dimethylacetamide (DMAC) and N-methyl-2-pyrrolidone (NMP) are particularly preferred as organic solvents. Furthermore, such solvents can be used singly or in mixtures, and can be used in mixtures with other solvents such as aromatic hydrocarbons, for example toluene, xylene or the like. In addition, small amounts of water can be included.

In an E-type viscometer at 0.5 rpm, specifically at a shear rate of 1.92 s$^{-1}$, the viscosity of the coating material for coating according to the present invention is preferably $\geq 200$ poise and $\leq 5,000$ poise. This is in order to be able to utilize a simultaneous liquid molding method using the manufacturing equipment shown in Figure 2 during the manufacture of the cylindrical laminated body. It is not preferable for this viscosity of the coating material for coating to be less than 200 poise, because the application of the coating material for coating becomes difficult and the film thickness of after application becomes thinner, while conversely, it is not preferable for this viscosity of the coating material for coating to be greater than 5,000 poise due to poor handleability, for example, difficulty in supplying the liquid using air pressure or a gear pump or the like.

In addition, in an E-type viscometer at 0.5 rpm, specifically at a shear rate of 1.92 s$^{-1}$, the viscosity of the coating material for coating according to the present invention is preferably higher than the viscosity at 1.0 rpm. In other words, it is preferably for the coating material for coating according to the present invention to have thixotropy. It is more preferable when the [viscosity at 0.5 rpm]/[viscosity at 1.0 rpm] value is greater than 1, and it is preferably less than 5. When the [viscosity at 0.5 rpm]/[viscosity at 1.0 rpm] value is within this range, the coating material for coating can be applied at a high shear rate, and after application, in other words, the viscosity increases at a low shear rate so that along with being able to prevent "sag" and "slack" in the coating film, the coating film will also take an suitable amount of time for leveling. The [viscosity at 0.5 rpm]/[viscosity at 1.0 rpm] value is more preferably greater than 1.25 and less than 5, and furthermore preferably greater than 1.5 and less than 5.

Additionally, the surface resistivity of the fluororesin covering film obtained using this coating material for coating is preferably $\geq 10^6$ $\Omega$/sq. and less than $10^{14}$ $\Omega$/sq. When the surface resistivity of the fluororesin covering film is within this range, it is possible to prevent static electric charge without losing smoothness and non-stickiness of the fluororesin covering film.

Moreover, when a laminated body is molded using the coating material for coating according to the present invention, heat-resistant resin or metal can be used as the substrate. Examples of heat-resistant resins that can be named include polyimide resin, polyamideimide resin, poly(ether ether ketone) (PEEK) resin, poly(phenylene sulfide) resin, poly(ether sulfone) resin and the like. Examples of metals that can be named include silver, aluminum, nickel, iron, stainless steel and the like. In addition, two or more types from among at least one of heat-resistant resins or metals can be laminated for use as the substrate.

Additionally, there is no objection to the optional addition of any of the following commonly known additives to the heat-resistant resin. Examples of such commonly known additives that can be named include fillers, pigments, pigment dispersing agents, solid lubricants, anti-settling agents, leveling agents, surface modification agents, water absorption agents, gelation inhibiting agents, oxidation inhibiting agents, ultraviolet radiation absorbing agents, light stabilizing agents, plasticizers, color separation prevention agents, anti-skinning agents, surfactants, antistatic agents, antifoaming agents, antibacterial agents, mildew-proofing agents, preservative agents, thickening agents, thermal conductivity imparting agents and the like. Furthermore, examples of thermal conductivity imparting agents that can be named include silicon carbide, boron nitride, aluminum nitride, alumina, zinc oxide, magnesium oxide, diamond, black lead, carbon fiber, carbon nanofiber, carbon nanotubes, copper, aluminum, silver, iron, nickel and the like.

Furthermore, for the shape of the substrate in the present invention, without any particular limitation, the shape of the substrate can be a cylindrical body, a sheet or some other shape. However, when manufacturing a toner-fixing belt for an electrophotographic image forming device such as a fax machine, copier, laser printer or the like, the substrate is preferably a cylindrical body. Moreover, when it is necessary to allow excess electric charge escape from the external surface of the laminated body, the end of the substrate in the cylindrical laminated body is preferably exposed in the lengthwise direction.

Examples of methods that can be named for applying the coating material for coating according to the present invention to the surface of the substrate include commonly known methods such as the brush painting method, spin method, spray method, dispenser method, immersion method, extrusion method and the like. Furthermore, after one cycle of coating and baking, the film thickness of the fluororesin covering film obtained is preferably $\geq 5$ $\mu$m and $\leq 50$ $\mu$m. It is possible to mold a fluororesin covering film of less than 5 $\mu$m in one coating cycle, but this is not preferred for the reasons that it becomes easier for the surface roughness to be higher due to the influence of the discontinuities in the substrate surface, the strength of the fluororesin covering film will not be sufficient, and the like.

The baking of the coating material for coating according to the present invention can be carried out at or above the fusion temperature of the fluororesin, and below the temperature at which the fluororesin decomposes and vaporizes. In order to remove acrylic resins from the fluororesin covering film, the final baking temperature is preferably $\geq 350$ °C and $< 450$ °C. Furthermore, naturally so for metal, and also among polyimide resins when a high heat-resistant polyimide resin is used, there is no objection to a final baking of the coating material for coating according to the present invention at a temperature $\geq 400$ °C and $< 450$ °C.

Furthermore, the fluororesin covering film preferably has a surface roughness (ten-point average roughness, Rz) of $<7$ $\mu$m, and more preferably $<4$ $\mu$m. A surface roughness $\geq 7$ $\mu$m is not preferred because the external appearance is impaired thereby. In particular, in the surface layer material of the toner fixing belt in an electrophotographic image forming device such as a fax machine, a copier or a laser printer, along with non-stickiness there is a requirement for high reproducibility of printed characters. For this reason, low surface roughness is preferred when a fluororesin covering film is such a surface layer material.

The present invention is further explained below in concrete terms exemplified with working examples and comparative examples. Furthermore, various physical properties of the coating material for coating and the fluororesin covering film prepared in the each of the working examples and comparative examples were measured using the measurement methods shown below.

(1) Viscosity
This was measured using an E rotational viscometer (Tokyo Keiki Co. model VISCONIC EH D) under conditions of a $23 \pm 2$ °C atmosphere and rotational speed of 0.5 rpm (shear rate of 1.92 s$^{-1}$).
(2) Thixotropy index
This was measured using an E rotational viscometer (Tokyo Keiki Co. model VISCONIC EH D) under conditions of a $23 \pm 2$ °C atmosphere. The thixotropy index was calculated from the viscosity $V_{0.5}$ when the rotational speed was 0.5 rpm (shear rate of 1.92 s$^{-1}$) and the viscosity $V_{1.0}$ when the rotational speed was 1.0 rpm (shear rate of 3.84 s$^{-1}$) by entering these into the equation (1) below.

$$\text{Thixotropy index} = V_{0.5}/V_{1.0} \qquad (1)$$

(3) Surface roughness
The ten-point average roughness Rz (JIS B0601-1982) was determined using a Kosaka Laboratory Surface Roughness Measuring Instrument model SE-3H.
(4) Surface resistivity
This was measured using a Mitsubishi Chemical model Hiresta MCP-HT450 high resistance meter.
(5) Ethanol repellency
Whether or not the fluororesin covering film could repel ethanol was determined by adding ethanol dropwise onto the fluororesin covering film.
(6) Scratch test
The adhesive strength was evaluated using this test. Furthermore, this test was carried out according to JIS K5400 using a Yasuda Seiki Seisakusho model No. 553 pencil hardness tester under conditions of a 500 g load and travel speed of 5 mm/s. Specifically, the test piece was scratched with pencils of hardness from H to 7H, and the results confirmed whether or not the coating layer of the test piece was delaminated.

[Working Example 1]

1. Raw materials for coating material for coating A

(1) Fluororesin particles PFA particles (Solvay Solexis) with an average particle diameter of 8 μm were used.
(2) Liquid dispersion of volatile resin particles 335 g of Polyzol AP-691T (Showa Kobunshi, nonvolatile content: 55 wt%), an aqueous dispersion of styrene-methacrylate ester copolymer resin particles with an average particle diameter of 0.13 μm, was diluted with 500 g of N-methyl-2-pyrrolidone (NMP) and used.
(3) Solvent N-methyl-2-pyrrolidone (NMP) was used.
(4) Thickening agent and thixotropy-imparting agent The water-soluble cross-linked acrylate resin Junlon PW-110 (Nippon Junyaku) was used.

2. Preparation of coating material for coating A

100 g of fluororesin particles was mixed with 167 g of the liquid dispersion of volatile resin particles. Furthermore, at this point the nonvolatile portion of the liquid dispersion of volatile resin particles was present as 37.8 parts by weight based on 100 parts by weight of the fluororesin particles.

Then, to this mixture was added 43.8 g of 28 g of the thixotropy-imparting agent added to 191 g of NMP to yield coating material for coating A.

Furthermore, this coating material for coating A had a viscosity of 750 poise and a thixotropy index of 1.7.

3. Simultaneous liquid molding

After RC-5063 (IST) polyimide precursor solution with added conductive agent, adjusted to a viscosity of 980 poise, and the coating material for coating A were simultaneously liquid molded using the covering film molding device shown in Figure 2, this was baked at 80 °C for 10 minutes, 100 °C for 10 minutes, 150 °C for 10 minutes, 200 °C for 20 minutes, 250 °C for 20 minutes, 320 °C for 20 minutes, 360 °C for 20 minutes and 400 °C for 20 minutes to yield a bi-liquid molded cylindrical laminated body with an inner diameter of 24 mm. In this bi-liquid molded cylindrical laminated body, the thickness of the polyimide layer was approximately 60 μm and the thickness of the fluororesin covering film molded from the coating material for coating was approximately 15 μm. Furthermore, the polyimide resin layer and the fluororesin covering film were tightly bonded. In addition, the surface roughness (Rz) of the fluororesin covering film

was 2 μm.

Furthermore, the covering film molding device 50 used in Figure 2 will be explained here.

As shown in Figure 2, the covering film molding device 50 is chiefly constituted from a first covering film molding die 54, a second covering film molding die 55, a first pressure tank 58, a second pressure tank 59, a first solution valve 60, a second solution valve 61, a first main tube, a second main tube, a first distribution tube 62, a second distribution tube 63, a first distributor 64, a second distributor 65, a first pressure valve 68 and a second pressure valve 69.

The first covering film molding die 54 is a hollow cylindrical mold. Additionally, in the same manner as for the first covering film molding die 54, the second covering film molding die 55 is a hollow cylindrical mold. Furthermore, the inner diameter of the covering film molding dies 54, 55 is determined by the inner diameter and thickness of the desired multilayer polyimide cylindrical body. Furthermore, in this regard, it will be necessary to consider the outer diameter of the core body, the core body lifting speed, the viscosity of the polyimide precursor solution, the discharge speed of slit apertures 66, 67, and the like. Moreover, the inner peripheral diameter of second covering film molding die 55 will be slightly smaller than the inner peripheral diameter of the first covering film molding die 54. Thus, the first covering film molding die 54 is positioned to be adjacent to the lower side of the second covering film molding die 55 with its axis along the axis of second covering film molding die 55. Furthermore, a plurality of the slit apertures 66, 67 are formed in the inner peripheral walls in the first covering film molding die 54 and the second covering film molding die 55, traversing the entire periphery at predetermined intervals. With such slit apertures 66, 67 being formed, a solution molded layer can be molded with a uniform thickness with little unevenness in the discharge in the circumferential direction. In addition, the width of the slit apertures is preferably within the range 0.5 mm ~ 5 mm. Additionally, a plurality of liquid injection ports are formed in the outer peripheral walls of the first covering film molding die 54 and the second covering film molding die 55, and these liquid injection ports are connected to a plurality of distribution tubes 62, 63. Moreover, when 3 or more covering film molding dies are superimposed, it is necessary for the inner diameter of the covering film molding die located at a lower level to be smaller, and for the inner diameter of the covering film molding die located at an upper level to be larger.

The first pressure tank 58 is a storage vessel for storing the RC-5063 polyimide precursor solution with added conductive agent 56. Thus, a first pressure valve 68 is mounted on the upper lid of the first pressure tank 58, and in addition, a first solution valve 60 is mounted on the bottom.

The second pressure tank 59 is a storage vessel for storing the coating material for coating 57. Thus, second pressure valve 69 is mounted on the lid of the second pressure tank 59, and in addition, a second solution valve 61 is mounted on the bottom.

Pressurized air cylinders or the like are mounted on the first pressure valve 68 and the second pressure valve 69, and when the first pressure valve 68 and the second pressure valve 69 are in the open state, the interiors of pressure tanks 58, 59 are pressurized. Furthermore, at this time, if the solution valves 60, 61 are in the open state, the RC-5063 polyimide precursor solution with added conductive agent 56 and the coating material for coating 57 that are stored in the pressure tanks 58, 59 are sent to the hollow space of the covering film molding dies 54, 55.

The first solution valve 60 and the second solution valve 61 are open/close-type motorized valves. Furthermore, although not shown in the Figure, the solution valves 60, 61 are connected to communicate with a timing control device, and when the start-up button of the timing control device is pushed, initially the first solution valve 60 is in the open state, and thereafter when a predetermined time period has elapsed, the second solution valve 61 will be in the open state.

The first distributor 64 and the second distributor 65 have 1 inlet port and a plurality of outlet ports, and these inlet ports are connected to a main tube and the outlet ports are connected to the distribution tubes 62, 63. In other words, these distributors 64, 65 play the role of distributing the RC-5063 polyimide precursor solution with added conductive agent 56 and the coating material for coating 57 that are delivered from pressure tanks 58, 59 through the main tubes to a plurality of channels.

In other words, when the first pressure valve 68 and the second pressure valve 69 are in the opened state, the start-up button of the timing control device is pushed, and after the RC-5063 polyimide precursor solution with added conductive agent 56 is distributed to a plurality of channels by the distributor 64, it is supplied to the first covering film molding die 54, discharged from the slit apertures 66. Then, with a slight delay, after the coating material for coating 57 is distributed to a plurality of channels using the second distributor 65, it is supplied to the second covering film molding die 55 and discharged from the slit apertures 67.

Next, the simultaneous liquid molding method is explained.

In the covering film molding device 50, the RC-5063 polyimide precursor solution with added conductive agent 56 is added into the first pressure tank 58, and the coating material for coating 57 is added into the second pressure tank 59. Then, initially, with the axis of core body 51 turned to the vertical direction, a core body 51 is hung in a suspended state with a suspension cord 70 and is introduced into the inner hole of the first covering film molding die 54, and thereafter the core body 51 is positioned with the uppermost end of the core body 51 at nearly the same location as slit apertures 66 of the first covering film molding die 54. Next, with the interior of the first pressure tank 58 in a pressurized state from the first pressure valve 68, the first solution valve 60 is opened and the RC-5063 polyimide precursor solution with added conductive agent 56 is pressure fed to the first covering film molding die 54. Then, the core body 51 is lifted in the Y direction, and at the point in time when the position 30 mm below the uppermost end of core body 51 passes the first slit apertures 66, the RC-5063 polyimide precursor solution with added conductive agent 56 from the first slit apertures 66 begins to coat the outer surface of the core body 51 at a thickness of approximately 600 μm.

On the other hand, for the coating material for coating A 57 stored in the second pressure tank 59, in the same manner as for the RC-5063 polyimide precursor solution with added conductive agent 56, with the interior of the second pressure tank 59 in a pressurized state from the second pressure valve 69, the second solution valve 61 is opened and the coating material for coating A 57 is pressure fed to the second covering film molding die 55. Then, at the initial molding position for the RC-5063 polyimide precursor solution with added conductive agent 56 that was molded onto the surface of the core body 51, immediately after passing second slit apertures 67, coating material for coating A 57 is discharged from second slit apertures 67 and the coating material for coating A 57 begins to be coated onto the molded layer of the RC-5063 polyimide precursor solution with added conductive agent 56 at a thickness of 150 μm.

Thereupon, the RC-5063 polyimide precursor solution molded layer 52 and the coating material for coating molded layer 53 are coated simultaneously.

Thereafter, at the point in time when the position approximately 30 mm above the lowermost end of the core body 51 passes the position of second slit apertures 67, the pressure feeding of each of the raw materials 56, 57 from the two pressure tanks 58, 59 is interrupted, and a solution molded layer of length approximately 440 mm has been molded onto the core body 51. Then, the core body 51 is withdrawn from the covering film molding device 50, and the core body 51 is placed as is in an oven. Thereupon, under the abovementioned conditions, the solution molded layer is dried together with the polyimide precursor undergoing imidization to yield the desired cylindrical laminated body. Then, after this core body 51 is cooled to room temperature, the cylindrical laminated body is removed from the core body 51.

Furthermore, there is no problem that the coating material for coating A 57 is fed to first pressure tank 58, and the RC-5063 polyimide precursor solution with added conductive agent 56 is fed to second pressure tank 59 if the core body is pulled down in the Y direction. Moreover, there is no problem that the core body 51 is fixed, and the first covering film molding die 54 and the second covering film molding die 55 are moved up or down.

4. Evaluation as a fixing belt

With the cylindrical laminated body that was a bi-liquid molded cylindrical laminated body incorporated into the laser printer fixing device shown in Figure 1, electrostatic charge on the inner surface was removed using a carbon brush, and in the results of an image-fixing test performed at 24 pages/minute, no offset occurred and satisfactory images were obtained.

5. Evaluation of adhesiveness

The bi-liquid molded cylindrical laminated body was cut open, and when a scratch test was performed, the fluororesin covering film was shaved off at 6H, but no interlaminar peeling was observed, and the polyimide resin layer and the fluororesin covering film were perceived to be tightly integrated.

[Working Example 2]

1. Preparation of coating material for coating B

Except that before the thixotropy-imparting agent was added, 30.3 g of RC-5063 polyimide varnish (IST, BPDA/PPD, NMP solvent) with a polyimide resin content of 17.5 wt% was added and mixed, this was done in the same manner as for Working Example 1 to yield coating material for coating B. Furthermore, at this point the nonvolatile portion of the liquid dispersion of volatile resin particles was present as 37.8 parts by weight based on 100 parts by weight of the fluororesin particles. Moreover, the polyimide resin was present as 5.3 parts by weight based on 100 parts by weight of fluororesin particles.

Furthermore, this coating material for coating B had a viscosity of 750 poise and a thixotropy index of 1.7.

2. Coating the substrate

The coating material for coating B was coated respectively onto a polyimide cylindrical body with added carbon conductive agent (inner diameter 24 mm, thickness 60 $\mu$m), a stainless steel cylindrical body (inner diameter 30 mm, thickness 50 $\mu$m), and an electroformed nickel cylindrical body (inner diameter 24 mm, thickness 75 $\mu$m) so that the thickness after baking would be 15 $\mu$m. Furthermore, for the stainless steel cylindrical body, the coating material for coating B was coated so as to expose 10 mm from the end in the lengthwise direction. Then, these cylindrical bodies in the standing state were baked at 80 °C for 10 minutes, 100 °C for 10 minutes, 150 °C for 10 minutes, 200 °C for 20 minutes, 250 °C for 20 minutes, 320 °C for 20 minutes, 360 °C for 20 minutes and 400 °C for 20 minutes to yield the final cylindrical laminated body. Furthermore, no "sags" in the fluororesin covering film were produced in any of the cylindrical laminated bodies, and the fluororesin covering films were tightly integrated with the substrates. In addition, the surface roughness (Rz) of the fluororesin covering films was 2 $\mu$m.

3. Evaluation as a fixing belt

With the cylindrical laminated body of which substrate was the polyimide cylindrical body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.

With the cylindrical laminated body of which substrate was a stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

4. Evaluation of adhesiveness

The 3 types of the cylindrical laminated bodies of which substrate was respectively the polyimide cylindrical body with added carbon conductive agent, the stainless steel cylindrical body, and the electroformed nickel cylindrical body, were cut open, and when a scratch test was performed the fluororesin covering film was shaved off at '2H in all of the laminated bodies, but no interlaminar peeling was observed, and the fluororesin covering film was perceived to be tightly integrated with the cylindrical body.

5. Simultaneous liquid molding

Except for substituting the coating material for coating B for the coating material for coating A, this was carried out in the same manner as for Working Example 1 to yield a bi-liquid molded cylindrical laminated body. Furthermore, the polyimide resin layer and the fluororesin covering film were tightly bonded. In addition, the surface roughness (Rz) of the fluororesin covering film was 2 $\mu$m.

6. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

7. Evaluation of adhesiveness

The bi-liquid molded cylindrical laminated body was cut open, and when a scratch test was performed,

the fluororesin covering film was shaved off at 5H, but no interlaminar peeling was observed, and the polyimide resin layer and the fluororesin covering film were perceived to be tightly integrated.

[Working Example 3]

1. Preparation of coating material for coating C

Except for substituting 78.1 g for 167 g as the quantity of the liquid dispersion of volatile resin particles, this was carried out in the same manner as Working Example 1 to yield coating material for coating C. Furthermore, at this point the nonvolatile portion of the liquid dispersion of volatile resin particles was present as 17.2 parts by weight based on 100 parts by weight of the fluororesin particles.
Furthermore, this coating material for coating C had a viscosity of 770 poise and a thixotropy index of 1.7.

2. Simultaneous liquid molding

Except for substituting the coating material for coating C for the coating material for coating A, this was carried out in the same manner as for Working Example 1 to yield a bi-liquid molded cylindrical laminated body. Furthermore, the polyimide resin layer and the fluororesin covering film were tightly bonded. In addition, the surface roughness (Rz) of the fluororesin covering film was 3 μm.

3. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

4. Evaluation of adhesiveness

The bi-liquid molded cylindrical laminated body was cut open, and when a scratch test was performed, the fluororesin covering film was shaved off at 5H, but no interlaminar peeling was observed, and the polyimide resin layer and the fluororesin covering film were perceived to be tightly integrated.

[Working Example 4]

1. Preparation of coating material for coating D

Except for substituting 17.7 g for 30.3 g as the quantity of the RC-5063 polyimide varnish, this was carried out in the same manner as Working Example 2 to yield coating material for coating D. Moreover, the polyimide resin was present as 3.1 parts by weight based on 100 parts by weight of fluororesin particles.

Furthermore, this coating material for coating D had a viscosity of 750 poise and a thixotropy index of 1.7.

2. Coating the substrate

In the same manner as in Working Example 2, a cylindrical laminated body having a fluororesin covering film was prepared from the coating material for coating D. Furthermore, the fluororesin covering film was tightly bonded to all of the substrates. In addition, the surface roughness of the fluororesin covering film was 2 μm.

3. Evaluation as a fixing belt

With the cylindrical laminated body of which substrate was the polyimide cylindrical body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.
With the cylindrical laminated body of which substrate was a stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

4. Evaluation of adhesiveness

The 3 types of the cylindrical laminated bodies of which substrate was respectively the polyimide cylindrical body with added carbon conductive agent, the stainless steel cylindrical body, and the electroformed nickel cylindrical body, were cut open, and when a scratch test was performed, no interlaminar peeling was observed in any of the cylindrical bodies, and the fluororesin covering film was perceived to be tightly integrated with the cylindrical body.

5. Simultaneous liquid molding

Except for substituting the coating material for coating D for the coating material for coating B, this was carried out in the same manner as for Working Example 2 to yield a bi-liquid molded cylindrical laminated body. Furthermore, the polyimide resin layer and the fluororesin covering film were tightly bonded. In addition, the surface roughness (Rz) of the fluororesin covering film was 2 μm.

6. Evaluation as a fixing belt

The bi-liquid molded cylindrical laminated body was incorporated into the laser printer fixing device shown in Figure 1, and in the results of an image-fixing test performed at 36 pages/minute, no offset occurred and satisfactory images were obtained.

### 7. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 5]

### 1. Preparation of coating material for coating E

Except for substituting 43.1 g for 30.3 g as the quantity of the RC-5063 polyimide varnish, this was carried out in the same manner as Working Example 2 to yield the coating material for coating E. Furthermore, the polyimide resin was present as 7.5 parts by weight based on 100 parts by weight of fluororesin particles.
Furthermore, this coating material for coating E had a viscosity of 750 poise and a thixotropy index of 1.7.

### 2. Coating the substrate

In the same manner as in Working Example 2, a cylindrical laminated body having a fluororesin covering film was prepared from the coating material for coating E. Furthermore, the fluororesin covering film was tightly bonded to all of the substrates. In addition, the surface roughness of the fluororesin covering film was 3 $\mu$m. In addition, when an image-fixing test of this cylindrical laminated body was performed, satisfactory images could be obtained.

### 3. Evaluation as a fixing belt

With the cylindrical laminated body of which substrate was the polyimide cylindrical laminated body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.
With the cylindrical laminated body of which substrate was the stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

### 4. Evaluation of adhesiveness

The 3 types of the cylindrical laminated bodies of which substrate was respectively the polyimide cylindrical body with added carbon conductive agent, the stainless steel cylindrical body, and the electroformed nickel cylindrical body, were cut open, and when a scratch test was performed, no interlaminar peeling was observed in any of the cylindrical bodies, and the fluororesin covering film was perceived to be tightly integrated with the cylindrical body.

### 5. Simultaneous liquid molding

Except for substituting the coating material for coating E for the coating material for coating B, this was carried out in the same manner as for Working Example 2 to yield a bi-liquid molded cylindrical laminated body. Furthermore, the polyimide resin layer and the fluororesin covering film were tightly bonded. In addition, the surface roughness (Rz) of the fluororesin covering film was 3 $\mu$m.

### 6. Evaluation as a fixing belt

The bi-liquid molded cylindrical laminated body was incorporated into the laser printer fixing device shown in Figure 1, and in the results of an image-fixing test performed at 36 pages/minute, no offset occurred and satisfactory images were obtained.

### 7. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 6]

### 1. Preparation of coating material for coating F

Except for the substitution of a mixture of 80 g of PFA particles with an average particle size of 8 $\mu$m and 20 g of poly(tetrafluoroethylene) (PTFE, Kitamura) with an average particle size of 3.5 $\mu$m as the fluororesin particles, this was carried out in the same manner as Working Example 1 to yield coating material for coating F.
Furthermore, this coating material for coating F had a viscosity of 700 poise and a thixotropy index of 1.5.

### 2. Simultaneous liquid molding

Except for substituting the coating material for coating F for the coating material for coating A, this was carried out in the same manner as for Working Example 1 to yield a bi-liquid molded cylindrical laminated body. Furthermore, the polyimide resin layer and the fluororesin covering film were tightly bonded. In addition, the surface roughness (Rz) of the fluororesin covering film was 2 $\mu$m.

3. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

4. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 7]

1. Preparation of coating material for coating G

Except for substituting 35.3 g of RC-5019 polyimide varnish (IST, PMDA/ODA, NMP solvent, polyimide content 15.0 wt%) for 30.3 g of the RC-5063 polyimide varnish, this was carried out in the same manner as Working Example 2 to yield coating material for coating G. Furthermore, at this time, the polyimide resin was present as 5.3 parts by weight based on 100 parts by weight of fluororesin particles.
Furthermore, this coating material for coating G had a viscosity of 750 poise and a thixotropy index of 1.7.

2. Coating the substrate

In the same manner as in Working Example 2, a cylindrical laminated body having a fluororesin covering film was prepared from the coating material for coating G. Furthermore, no "sags" in the fluororesin covering film were produced in any of the cylindrical laminated bodies, and the fluororesin covering films were tightly integrated with the substrates. In addition, the surface roughness of the fluororesin covering film was 2 $\mu$m.

3. Evaluation as a fixing belt.

With the cylindrical laminated body of which substrate was the polyimide cylindrical laminated body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.
With the cylindrical laminated body of which substrate was the stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

4. Evaluation of adhesiveness

The 3 types of the cylindrical laminated bodies of which substrate was respectively the polyimide cylindrical body with added carbon conductive agent, the stainless steel cylindrical body, and the electroformed nickel cylindrical body, were cut open, and when a scratch test was performed, no interlaminar peeling was observed in any of the cylindrical bodies, and the fluororesin covering film was perceived to be tightly integrated with the cylindrical body.

5. Simultaneous liquid molding

Except for substituting the coating material for coating G for the coating material for coating B, this was carried out in the same manner as for Working Example 2 to yield a bi-liquid molded cylindrical laminated body. Furthermore, the polyimide resin layer and the fluororesin covering film were tightly bonded. In addition, the surface roughness (Rz) of the fluororesin covering film was 2 $\mu$m.

6. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

7. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 8]

1. Preparation of coating material for coating H

Except for substituting 30.3 g of polyetherimide (GE Plastics Japan) for 30.3 g of the RC-5063 polyimide varnish, this was carried out in the same manner as Working Example 2 to yield coating material for coating H.
Furthermore, this coating material for coating H had a viscosity of 750 poise and a thixotropy index of 1.7.

2. Coating the substrate

In the same manner as in Working Example 2, a cylindrical laminated body having a fluororesin covering film was prepared from the coating material for coating H. Furthermore, no "sags" in the fluororesin covering film were produced in any of the cylindrical laminated bodies, and the fluororesin covering films were tightly integrated with the substrates. In addition, the surface roughness of the fluororesin covering film was 2 $\mu$m.

3. Evaluation as a fixing belt.

With the cylindrical laminated body of which substrate was the polyimide cylindrical body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.
With the cylindrical laminated body of which substrate was the stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

4. Evaluation of adhesiveness

The 3 types of cylindrical laminated body, namely the polyimide cylindrical body with added carbon conductive agent, the stainless steel cylindrical body, and the electroformed nickel cylindrical body, were cut open, and when a scratch test was performed, no interlaminar peeling was observed in any of the cylindrical bodies, and the fluororesin covering film was perceived to be tightly integrated with the cylindrical body.

5. Simultaneous liquid molding

Except for substituting the coating material for coating H for the coating material for coating B, this was carried out in the same manner as for Working Example 2 to yield a bi-liquid molded cylindrical laminated body. Furthermore, the polyimide resin layer and the fluororesin covering film were tightly bonded. In addition, the surface roughness (Rz) of the fluororesin covering film was 2 $\mu$m.

6. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

7. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 9]

1. Preparation of coating material for coating I

To the coating material for coating A prepared in Working Example 1 was admixed 22.5 g of Inco Type 210 filamentous nickel (Inco) with an average particle diameter of 0.5 $\mu$m ~ 1.0 $\mu$m to yield coating material for coating I. Furthermore, the filamentous nickel was present as 22.5 parts by weight based on 100 parts by weight of fluororesin particles.
Furthermore, this coating material for coating I had a viscosity of 820 poise and a thixotropy index of 1.7.

2. Coating the substrate

The coating material for coating I was coated onto a cylindrical body of polyimide with added boron nitride (thickness: 60 $\mu$m) so as to have a thickness after baking of 15 $\mu$m. Then, the cylindrical body in the standing state was baked at 80 °C for 10 minutes, 100 °C for 10 minutes, 150 °C for 10 minutes, 200 °C for 20 minutes, 250 °C for 20 minutes, 320 °C for 20 minutes, 360 °C for 20 minutes and 400 °C for 20 minutes to yield the final cylindrical laminated body. Furthermore, no "sags" in the fluororesin covering film were produced in this cylindrical laminated body, and the fluororesin covering film was tightly integrated with the substrate. In addition, the surface roughness of the fluororesin covering film was 2 $\mu$m. Additionally, the surface resistance of the fluororesin covering film was $10^{10}$ $\Omega$/sq.

3. Evaluation as a fixing belt

The abovementioned cylindrical laminated body was incorporated into the laser printer fixing device shown in Figure 1, electrostatic charge was removed from the surface of the cylindrical laminated body, and in the results of an image-fixing test performed at 36 pages/minute, no offset occurred and satisfactory images were obtained.

4. Evaluation of adhesiveness

The abovementioned cylindrical laminated body was cut open, and when a scratch test was performed, the fluororesin covering film was shaved off at 3H, but no interlaminar peeling was observed, and the polyimide resin layer and the fluororesin covering film were perceived to be tightly integrated.

[Working Example 10]

1. Raw materials for coating material for coating J

Except for substituting "the liquid dispersion of volatile resin particles produced by diluting 347 g of the aqueous dispersion of polyether-type urethane resin particles NeoRez R-9403 ( Kusumoto Chemicals, nonvolatile content: 31 wt%) with an average particle diameter of 0.02 $\mu$m with 500 g of N-methyl-2-pyrrolidone" for "the liquid dispersion of volatile resin particles produced by diluting 335 g of Polyzol AP-691T with 500 g of N-methyl-2-pyrrolidone", the same raw materials as for Working Example 1 were used.

2. Preparation of-coating material for coating J

100 g of fluororesin particles and 141 g of the liquid dispersion of volatile resin particles (urethane resin particles) were mixed. Furthermore, at this point the nonvolatile portion of the liquid dispersion of volatile resin particles was present as 17.9 parts by weight based on 100 parts by weight of the fluororesin particles.
Then, to this mixture was added 110 g of 15 g of the thixotropy-imparting agent added to 314 g of NMP to yield coating material for coating J.
Furthermore, this coating material for coating J had a viscosity of 725 poise and a thixotropy index of 1.65.

3. Coating the substrate

The coating material for coating J was coated respectively onto a polyimide cylindrical body with an added carbon conductive agent (inner diameter 24 mm, thickness 60 $\mu$m), a stainless steel cylindrical body (inner diameter 30 mm, thickness 50 $\mu$m), and an electroformed nickel cylindrical body (inner diameter 24 mm, thickness 75 $\mu$m) so that the thickness after baking would be 15 $\mu$m. Furthermore, for the stainless steel cylindrical body, the coating material for coating J was coated so as to expose 10 mm from the end in the lengthwise direction. Then, these cylindrical bodies in the standing state were baked at 80 °C for 10 minutes, 100 °C for 10 minutes, 150 °C for 10 minutes, 200 °C for 20 minutes, 250 °C for 20 minutes, 320 °C for 20 minutes, 360 °C for 20 minutes and 400 °C for 20 minutes to yield the final cylindrical laminated body. Furthermore, no "sags" in the fluororesin covering film were seen to occur in any of the cylindrical laminated bodies, and the fluororesin covering films were tightly integrated with the substrates. In addition, the surface roughness of the fluororesin covering film was 2 $\mu$m.

4. Evaluation as a fixing belt.

With the cylindrical laminated body of which substrate was the polyimide cylindrical body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.

With the cylindrical laminated body of which substrate was the stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

5. Evaluation of adhesiveness

The 3 types of the cylindrical laminated bodies of which substrate was respectively the polyimide cylindrical body with added carbon conductive agent, the stainless steel cylindrical body, and the electroformed nickel cylindrical body, were cut open, and when a scratch test was performed, no interlaminar peeling was observed, and the fluororesin covering film was perceived to be tightly integrated with the cylindrical body.

[Working Example 11]

1. Preparation of coating material for coating K

Except for substituting 100 g for 141 g as the quantity of the liquid dispersion of volatile resin particles, this was carried out in the same manner as Working Example 2 to obtain coating material for coating K. Furthermore, at this point the nonvolatile portion of the liquid dispersion of volatile resin particles was present as 12.7 parts by weight based on 100 parts by weight of the fluororesin particles.
Furthermore, this coating material for coating K had a viscosity of 725 poise and a thixotropy index of 1.65.

2. Coating the substrate

In the same manner as in Working Example 2, a cylindrical laminated body having a fluororesin covering film was prepared from the coating material for coating K. Furthermore, no "sags" in the fluororesin covering film were seen to occur in any of the cylindrical laminated bodies, and the fluororesin covering films were tightly integrated with the substrates. In addition, the surface roughness of the fluororesin covering film was 2 $\mu$m.

3. Evaluation as a fixing belt.

With the cylindrical laminated body of which substrate was the polyimide cylindrical body with added carbon conductive agent incorporated into the laser printer fixing device shown in Figure 1, electrostatic charge on the inner surface was removed using a carbon brush, and in the results of an image-fixing test performed at 24 pages/minute, no offset occurred and satisfactory images were obtained.

With the cylindrical laminated body of which substrate was the stainless steel cylindrical body incorporated into the laser printer fixing device shown in Figure 1, electrostatic charge was removed from the exposed stainless steel part on the outer surface using a carbon brush, and in the results of an image-fixing test performed at 36 pages/minute, no offset occurred and satisfactory images were obtained.

4. Evaluation of adhesiveness

The 3 types of the cylindrical laminated bodies of which substrate was respectively the polyimide cylindrical body with added carbon conductive agent, the stainless steel cylindrical body, and the electroformed nickel cylindrical body, were cut open, and when a scratch test was performed, no interlaminar peeling was observed, and the fluororesin covering film was perceived to be tightly integrated with the cylindrical body.

5. Simultaneous liquid molding

Except for substituting the coating material for the coating K for coating material for coating B, this was carried out in the same manner as for Working Example 2 to obtain a bi-liquid molded cylindrical laminated body. Furthermore, the polyimide resin layer and the fluororesin covering film were tightly bonded. In addition, the surface roughness (Rz) of the fluororesin covering film was 2 $\mu$m.

6. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

7. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 12]

1. Raw materials for coating material for coating L

Except for substituting Banstar ST900, associative acrylic emulsion for Junlon PW-110 as the thickening and thixotropy-imparting agents, the same raw materials as in Working Example 1 were used.

2. Preparation of coating material for coating L

100 g of fluororesin particles was mixed with 167 g of the liquid dispersion of volatile resin particles. Furthermore, at this point the nonvolatile portion of the liquid dispersion of volatile resin particles was present as 37.8 parts by weight based on 100 parts by weight of the fluororesin particles.

Then, to this mixture was added 17.1 g of the thixotropy-imparting agent and 10.1 g of 10 wt% aqueous ammonia to yield coating material for coating L.

Furthermore, this coating material for coating L had a viscosity of 730 poise and a thixotropy index of 1.6.

3. Simultaneous liquid molding

Except for substituting the coating material for coating L for the coating material for coating A, this was carried out in the same manner as for Working Example 1 to yield a bi-liquid molded cylindrical laminated body. Furthermore, the polyimide resin layer and the fluororesin covering film were tightly bonded. In addition, the surface roughness (Rz) of the fluororesin covering film was 2 $\mu$m.

4. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

5. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

[Working Example 13]

1. Preparation of coating material for coating M

Except for substituting 317.2 g for 167 g as the quantity of the liquid dispersion of volatile resin particles, this was carried out in the same manner as Working Example 1 to yield coating material for coating M. Furthermore, at this point the nonvolatile portion of the liquid dispersion of volatile resin particles was present as 70.0 parts by weight based on 100 parts by weight of the fluororesin particles.

Furthermore, this coating material for coating M had a viscosity of 770 poise and a thixotropy index of 1.7.

2. Simultaneous liquid molding

Except for substituting the coating material for coating M for the coating material for coating A, this was carried out in the same manner as for Working Example 1 to obtain a bi-liquid molded cylindrical laminated body. Furthermore, the polyimide resin layer and the fluororesin covering film were tightly bonded. In addition, the surface roughness (Rz) of the fluororesin covering film was 2 μm.

4. Evaluation as a fixing belt.

The bi-liquid molded cylindrical laminated body was incorporated into the laser printer fixing device shown in Figure 1, and in the results of an image-fixing test performed at 36 pages/minute, no offset occurred and satisfactory images were obtained.

5. Evaluation of adhesiveness

The bi-liquid molded cylindrical laminated body was cut open, and when a scratch test was performed, no interlaminar peeling was observed, and the polyimide resin layer and the fluororesin covering film were perceived to be tightly integrated.

(Comparative Example 1)

1. Preparation of coating material for coating N

Except for substituting 20.3 g for 167 g as the quantity of the liquid dispersion of volatile resin particles, such that the nonvolatile content of the liquid dispersion of volatile resin particles would be 4.5 parts by weight when the fluororesin particles were 100 parts by weight, this was done in the same manner as in Working Example 2 to yield coating material for coating N.

2. Coating the substrate

In the same manner as in Working Example 2, a cylindrical laminated body having a fluororesin covering film was prepared from the coating material for coating N. Nevertheless, cracks occurred in the fluororesin covering film. Moreover, the surface roughness of the fluororesin covering film covering film was 8.8 μm, which was not preferred.

3. Simultaneous liquid molding

Except for substituting the coating material for coating N for the coating material for coating B, this was carried out in the same manner as for Working Example 2 to obtain a bi-liquid molded cylindrical laminated body. Nevertheless, in the same manner as before, cracks occurred in the fluororesin covering film. Moreover, in the same manner as before, the surface roughness of the fluororesin covering film covering film was 8.8 μm, which

was not preferred.

(Comparative Example 2)

1. Preparation of coating material for coating O

Except for substituting 35.4 g for 141 g as the quantity of the liquid dispersion of volatile resin particles, such that the nonvolatile content of the liquid dispersion of volatile resin particles would be 4.5 parts by weight when the fluororesin particles were 100 parts by weight, this was done in the same manner as in Working Example 10 to yield coating material for coating O.

2. Coating the substrate

In the same manner as in Working Example 10, a cylindrical laminated body having a fluororesin covering film was prepared from the coating material for coating O. Nevertheless, cracks occurred in the fluororesin covering film. Moreover, the surface roughness of the fluororesin covering film covering film was 8.8 μm, which was not preferred.

3. Simultaneous liquid molding

Except for substituting the coating material for coating O for the coating material for coating B, this was carried out in the same manner as for Working Example 2 to obtain a bi-liquid molded cylindrical laminated body. Nevertheless, in the same manner as before, cracks occurred in the fluororesin covering film. Moreover, in the same manner as before, the surface roughness of the fluororesin covering film covering film was 8.8 μm, which was not preferred.

(Comparative Example 3)

1. Preparation of coating material for coating P

Except for substituting 590.5 g for 141 g as the quantity of the liquid dispersion of volatile resin particles, such that the nonvolatile content of the liquid dispersion of volatile resin particles would be 75 parts by weight when the fluororesin particles were 100 parts by weight, this was done in the same manner as in Working Example 10 to yield coating material for coating P.

2. Coating the substrate

In the same manner as in Working Example 10, a cylindrical laminated body having a fluororesin covering film was prepared from the coating material for coating P. Nevertheless, the fluororesin covering film did not repel ethanol and the non-stickiness was ultimately reduced.

3. Simultaneous liquid molding

Except for substituting the coating material for coating P for the coating material for coating B, this was carried out in the same manner as for Working Example 2 to obtain a bi-liquid molded cylindrical laminated body. Nevertheless, in the same manner as before, the fluororesin covering film did not repel ethanol and the non-stickiness was ultimately reduced.

[INDUSTRIALAPPLICABILITY]

Since the coating material for coating according to the present invention has adhesiveness toward a substrate, and releasability and heat resistance when molded onto a substrate as a covering film that are superior, it can be useful as a coating material for coating in various components that require releasability, heat resistance and durability. Moreover, the cylindrical laminated body obtained by coating the coating material for coating according to the present invention onto a cylindrical body that comprises a substrate of polyimide resin or metal to mold a covering film can most preferably be applied to the fixing belt of an electrophotographic image forming device.

**Claims**

1. A coating material for coating, comprising fluororesin particles,

    a liquid dispersion of volatile resin particles that includes resin particles that undergo volatilization or thermal decomposition at a temperature lower than the thermal decomposition temperature of the fluororesin particles (referred to below as "volatile resin particles"), and ≥5 parts by weight of nonvolatile content based on 100 parts by weight of the fluororesin particles, a thixotropy-imparting agent and an organic solvent.

2. The coating material for coating as recited in Claim 1, wherein the thixotropy-imparting agent is water-swellable or water-soluble acrylic resin particles.

3. The coating material for coating as recited in Claim 2, wherein the water-swellable or water-soluble acrylic resin particles are water-swellable or water-soluble cross-linked acrylic resin particles.

4. The coating material for coating as recited in any one of Claims 1 through 3, wherein the fluororesin includes ≥75 wt% of a tetrafluoroethylene-perfluoro(alkyl vinyl ether) copolymer (PFA).

5. The coating material for coating as recited in any one of Claims 1 through 4, wherein the volatile resin particles are acrylic resin particles with an average particle diameter of ≥0.01 μm and ≤15 μm, urethane resin particles with an average particle diameter of ≥0.01 μm and ≤15 μm, or a mixture thereof.

6. The coating material for coating as recited in any one of Claims 1 through 5, wherein the liquid dispersion of volatile resin particles is an aqueous liquid dispersion.

7. The coating material for coating as recited in any one of Claims 1 through 6, wherein the organic solvent is dimethylacetamide, N-methyl-2-pyrrolidone or a mixture thereof.

8. The coating material for coating as recited in any one of Claims 1 through 7, wherein the viscosity is ≥200 poise and ≤5000 poise.

9. The coating material for coating as recited in any one of Claims 1 through 8, wherein the thixotropy index is greater than 1 but less than 5.

10. The coating material for coating as recited in any one of Claims 1 through 9 that furthermore comprises an antistatic agent.

11. The coating material for coating as recited in Claim 10, wherein the antistatic agent is filamentous nickel with an average particle diameter of ≥0.1 μm and ≤15 μm.

12. The coating material for coating as recited in any one of Claims 1 through 11 that furthermore comprises an adhesive resin in ≥1.0 parts by weight and ≤10 parts by weight based on 100 parts by weight of the fluororesin particles.

13. The coating material for coating as recited in Claim 12, wherein the adhesive resin is a polyimide resin or a precursor of the polyimide resin.

14. A laminated body comprising

    a substrate and
    a covering film that is obtained by baking the coating material for coating as recited in any one of Claims 1 through 13, the covering film covering the substrate.

15. The laminated body as recited in Claim 14, wherein the substrate is a heat-resistant resin or metal.

**16.** The laminated body as recited in Claim 15, wherein the heat-resistant resin is a polyimide resin.

**17.** The laminated body as recited in Claim 14, wherein the substrate is metal and the coating material for coating is the coating material for coating as recited in either Claim 12 or Claim 13.

**18.** The laminated body as recited in either Claim 15 or Claim 17, wherein the metal is at least one selected from the group consisting of silver, aluminum, nickel, iron and stainless steel.

**19.** A laminated body comprising

a polyimide resin layer,
a covering film layer molded from the coating material for coating as recited in any one of Claims 1 through 12, and
a mixture layer wherein a polyimide resin phase that is continuous with the polyimide resin layer and a covering film resin phase that is continuous with the covering film layer are mixed.

**20.** The laminated body as recited in any one of Claims 14 through 19 with the shape of a cylindrical body.

**21.** The laminated body as recited in Claim 20, wherein portion present at one end or both ends in the longitudinal direction is not covered by the covering film made from the coating material for coating.

**22.** The laminated body as recited in any one of Claims 14 through 21, wherein the covering film has a surface resistivity $\geq 10^6$ $\Omega$/sq. and $< 10^{15}$ $\Omega$/sq.

**23.** A method for the manufacture of a cylindrical laminated body, comprising

a superimposed coating step for superimposed coating a core body with the coating material for coating as recited in any one of Claims 1 through 12 and a polyimide precursor solution,
a solvent removal step for removing solvent from the coating material for coating and the polyimide precursor solution, and
an imidization step for imidizing the polyimide precursor together with forming a covering film of the coating material for coating.

**24.** The method for the manufacture of a cylindrical laminated body as recited in Claim 23, wherein in the superimposed coating step, the coating material for coating has the same application length as the polyimide precursor solution or is applied for a shorter length than the application length of the polyimide precursor solution.

**25.** The method for the manufacture of a cylindrical laminated body as recited in Claim 23 or Claim 24, wherein in the superimposed coating step, the coating material for coating and the polyimide precursor solution are applied in a superimposing manner to the core body with the polyimide precursor solution and the coating material for coating being supplied to a covering film molding device that comprises a first cylindrical wall that possesses an aperture, and a second cylindrical wall that possesses an aperture and is positioned on the top side of the first cylindrical wall so that the axis of the second cylindrical wall runs along the axis of the first cylindrical wall, a first delivery portion that delivers the polyimide precursor solution to the aperture of the first cylindrical wall, and a second delivery portion that delivers the coating material for coating to the aperture of the second cylindrical wall.

**26.** The method for the manufacture of a cylindrical laminated body as recited in Claim 25, wherein at the beginning of the superimposed coating step, the delivery by the second delivery portion to the aperture of the second cylindrical wall is delayed compared to the delivery by the first delivery portion to the aperture of the first cylindrical wall when the coating material for coating and the polyimide precursor solution are applied in a superimposing manner to the core body.

**27.** The method for the manufacture of a cylindrical laminated body as recited in Claim 25 or Claim 26, wherein in the superimposed coating step, the interruption of the delivery by the first delivery portion to the aperture of the first cylindrical wall is delayed compared to the interruption of the delivery by the second delivery portion to the aperture of the second cylindrical wall when the application operation is interrupted.

Fig. 1

Fig. 2

## INTERNATIONAL SEARCH REPORT

| | International application No. |
|---|---|
| | PCT/JP2008/058209 |

**A. CLASSIFICATION OF SUBJECT MATTER**
*C09D127/12*(2006.01)i, *B32B27/30*(2006.01)i, *B32B27/34*(2006.01)i, *C09D7/12*
(2006.01)i, *C09D127/18*(2006.01)i, *C09D133/00*(2006.01)i, *C09D179/08*
(2006.01)i, *C09D5/04*(2006.01)n
According to International Patent Classification (IPC) or to both national classification and IPC

**B. FIELDS SEARCHED**

Minimum documentation searched (classification system followed by classification symbols)
C09D127/12, B32B27/30, B32B27/34, C09D7/12, C09D127/18, C09D133/00,
C09D179/08, C09D5/04

Documentation searched other than minimum documentation to the extent that such documents are included in the fields searched
Jitsuyo Shinan Koho 1922-1996 Jitsuyo Shinan Toroku Koho 1996-2008
Kokai Jitsuyo Shinan Koho 1971-2008 Toroku Jitsuyo Shinan Koho 1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-205151 A (I.S.T Corp.),<br>10 August, 2006 (10.08.06),<br>Claims; Par. Nos. [0016], [0023] to [0024],<br>[0028] to [0029]; Figs. 1 to 3<br>(Family: none) | 1-27 |
| Y | WO 2006/088189 A1 (I.S.T Corp.),<br>24 August, 2006 (24.08.06),<br>Claims; Par. Nos. [0028], [0036] to [0041],<br>[0049] to [0051], [0059]<br>& JP 2006-256323 A    & EP 1852751 A1 | 1-27 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 July, 2008 (08.07.08) | 15 July, 2008 (15.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/058209

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2003-062948 A  (3M Innovative Properties Co.),<br>05 March, 2003 (05.03.03),<br>Claims; Par. Nos. [0014] to [0015]<br>& WO 2003/013850 A1     & JP 2003-055480 A<br>& EP 1429919 A1          & KR 2004-026708 A<br>& AU 2002355399 A1       & US 2004/0191527 A1<br>& CN 1538911 A | 1-27 |
| Y | JP 2007-109640 A  (I.S.T Corp.),<br>26 April, 2007 (26.04.07),<br>Claims; Par. Nos. [0032] to [0034]<br>(Family: none) | 1-27 |
| P,A | JP 2008-024918 A  (I.S.T Corp.),<br>07 February, 2008 (07.02.08),<br>Claims; Par. Nos. [0014], [0020] to [0023]<br>(Family: none) | 1-27 |

Form PCT/ISA/210 (continuation of second sheet) (April 2007)

**REFERENCES CITED IN THE DESCRIPTION**

**Patent documents cited in the description**

- JP H0325471 B
- JP H08220907 B
- JP 2004174555 A
- JP 2005059588 A
- WO 2002046302 A
- JP H07178741 B